(19) Europäisches Patentamt
European Patent Office
Office européen des brevets

(11) Veröffentlichungsnummer: **0 245 674**
**A1**

# (12) EUROPÄISCHE PATENTANMELDUNG

(21) Anmeldenummer: **87105820.2**

(22) Anmeldetag: **21.04.87**

(51) Int. Cl.4: **C08F 222/06** , C08F 8/44 ,
D21H 3/38 ,
//(C08F222/06,210:00,212:00)

(30) Priorität: **10.05.86 DE 3615855**

(43) Veröffentlichungstag der Anmeldung:
**19.11.87 Patentblatt 87/47**

(84) Benannte Vertragsstaaten:
**AT BE CH DE ES FR GB GR IT LI LU NL SE**

(71) Anmelder: **AKZO N.V.**
**Velperweg 76**
**NL-6824 BM Arnhem(NL)**

(72) Erfinder: **Schürmann, Horst**
**Grüner Weg 105**
**D-5160 Düren(DE)**
Erfinder: **Weissen, Hans-Joachim Dr.**
**Kommweg 4**
**D-5166 Kreuzau(DE)**
Erfinder: **Schloter, Klaus Dr.**
**Friedhofstrasse 56**
**D-5166 Kreuzau(DE)**

(74) Vertreter: **Fett, Günter et al**
**Akzo GmbH Kasinostrasse 19-23**
**D-5600 Wuppertal 1(DE)**

## (54) Papierleimungsmittel, deren Herstellung sowie deren Verwendung.

(57) Kationische Leimungsmittel für Papier werden hergestellt durch Umsetzung von α-Olefinen mit Maleinsäureanhydrid, Imidierung des entstandenen Copolymerisats mit einem Polyamin, das mindestens eine tertiäre und eine primäre Aminogruppe aufweist und Quaternierung des Imids mit Epichlorhydrin in Gegenwart von Wasser. Zur Umsetzung zum Imid werden Copolymerisate mit einem durchschnittlichen Molekulargewicht von 3 000 bis 30 000 verwendet. Die Aminogruppen des erhaltenen polymeren Imidamins werden zu 1 bis 50 % mit einer Säure neutralisiert, nach der Teilneutralisation wird mit Wasser zu einer 5 bis 50 gew.-%igen Emulsion verdünnt und sodann mit Epichlorhydrin quaterniert. Das Leimungsmittel ist besonders als Oberflächenleimungsmittel und zum Leimen von Papier aus Sekundärfasern geeignet.

EP 0 245 674 A1

## Papierleimungsmittel, deren Herstellung sowie deren Verwendung

Die Erfindung betrifft kationische Leimungsmittel für Papier, deren Herstellung sowie deren Verwendung auf Basis von quaternierten polymeren Imidaminen, welche durch Copolymerisation von $\alpha$-Olefinen mit Maleinsäureanhydrid, Imidierung des Copolymerisats mit Diaminen und Quaternierung des Imidamins mit Epichlorhydrin erhalten worden sind.

Es ist bereits bekannt, Leimungsmittel der oben erwähnten Art herzustellen und bei der Leimung von Papier zu verwenden. So wird in der DE-OS 1 570 914 ein Verfahren zur Herstellung derartiger kationischer Leimungsmittel beschrieben. Die auf diese Weise hergestellten Leimungsmittel neigen jedoch zu Gelierung und müssen deshalb nach ihrer Herstellung mit Säure behandelt werden, was kurz vor oder während des Leimungsverfahrens den Einsatz von Alkali erforderlich macht.

Wird gegenüber dem$\alpha$-Olefin ein molarer Unterschuß an Maleinsäureanhydrid eingesetzt, werden Leimungsmittel erhalten, die in Wasser nur unter Schwierigkeiten löslich oder dispergierbar sind. Überschüsse an Maleinsäureanhydrid führen zu minderwertigen bzw. mittelmäßigen Leimen. Das Verfahren ist im übrigen nur für einen verhältnismäßig engen Molekulargewichtsbereich des Copolymerisats einsetzbar. Werden Copolymerisate mit Molekulargewichten über 5000 eingesetzt, so nimmt die Neigung des Produkts zum Gelieren schnell zu.

Die Lagerstabilität der Produkte läßt zu wünschen übrig; außerdem neigen die Epoxidgruppen in erheblichem Umfang zu Hydrolyse, so daß vor Einsatz des Produkts bei der Leimung mit Hilfe eines Ätzmittels die durch Hydrolyse entstandenen Alkoholgruppen wieder in eine Epoxidgruppe umgewandelt werden müssen.

Es besteht deshalb noch ein Bedürfnis nach einem verbesserten Verfahren zur Herstellung derartiger kationischer Leimungsmittel, die sich durch verbesserte Eigenschaften auszeichnen.

Aufgabe der Erfindung ist es deshalb, ein Verfahren zur Herstellung derartiger Leimungsmittel zur Verfügung zu stellen, welches die oben angezeigten Nachteile nicht aufweist und das zu Leimungsmitteln mit verbesserten Eigenschaften führt.

Aufgabe der Erfindung sind ferner Leimungsmittel, die sich insbesondere für Oberflächenleimung von Papier eigen und die sich besonders vorteilhaft für die Leimung von Papier aus sogenannten Sekundärfasern eignen.

Diese Aufgabe wird gelöst durch ein Verfahren zur Herstellung eines kationischen Leimungsmittels für Papier durch Umsetzen von $\alpha$-Olefinen mit Maleinsäureanhydrid zu einem Copolymerisat, Imidisierung des Copolymerisats mit einem Polyamin mit mindestens einer tertiären und einer primären Animogruppe und Quaternierung des Imids mit Epichlorhydrin in Gegenwart von Wasser, das dadurch gekennzeichnet ist, daß man $\alpha$-Olefine mit Maleinsäureanhydrid in einem Molverhältnis $\alpha$-Olefine zu Maleinsäureanhydrid von 1 : 0,8 bis 1 : 2 zu einem Copolymerisat mit einem durchschnittlichen Molekulargewicht von 3000 bis 30 000 umsetzt, das Copolymerisat mit dem Polyamin in einem molaren Verhältnis Anhydridgruppe zu Polyamin von 2 : 1 bis 1 : 1 imidiert, die Aminogruppen des erhaltenen polymeren Imidamins zu 1 bis 50 % mit einer Säure neutralisiert, das teilneutralisierte Imidamin mit Wasser zu einer 5 bis 50 gew.-%igen Emulsion verdünnt und sodann mit Epichlorhydrin quaterniert.

Ein molares Verhältnis Anhydridgruppe zu Polyamin von 1,4 : 1 bis 1 : 1 wird bevorzugt.

Als Polyamine sind aliphatische Diamine mit einer tertiären und einer Primären Aminogruppe besonders geeignet.

Vorzugsweise wird ein Copolymerisat mit einem durchschnittlichen Molekulargewicht von 5 000 bis 15 000 imidiert.

Die Herstellung des Copolymerisats kann in Masse bei Temperaturen von 140 - 200°C erfolgen. Eine Polymerisation bei Tempera turen über 200°C ist weniger zu empfehlen, da dann vorwiegend niedermolekulare Polymere entstehen können.

Die Aminogruppen des erhaltenen polymeren Imidamins werden vorzugsweise zu 1 bis 20 % neutralisiert. Zum Neutralisieren der Aminogruppen wird Mineralsäure, bevorzugt Schwefelsäure, eingesetzt.

Es ist vorteilhaft, wenn man das teilneutralisierte Imidamin mit Wasser zu einer 5 bis 50%igen Emulsion verdünnt.

Die Quaternierung mit Epichlorhydrin wird vorzugsweise bei Temperaturen von 10 bis 30°C, insbesondere bei Raumtemperatur durchgeführt.

Gegenstand der Erfindung sind ferner die Leimungsmittel, wie sie nach den vorstehend beschriebenen Verfahren erhalten werden können.

Die gemäß der Erfindung erhaltenen Leimungsmittel eignen sich besonders als Oberflächenleimungsmittel für Papier; sie sind ferner besonders geeignet zum Leimen von Papier aus Sekundärfasern, insbesondere zum Leimen von Liner-Papierqualitäten.

Die Herstellung des Copolymerisats aus α-Olefinen und Maleinsäureanhydrid kann nach an sich bekannten Methoden durchgeführt werden. Unter α-Olefinen sind übliche Alkene mit einer Doppelbindung in α-Stellung zu verstehen, insbesondere solche mit 8 bis 30 Kohlenstoffatomen. α-Olefine mit 14 bis 24 Kohlenstoffatomen sind bevorzugt. Unterα-Olefinen sind auch Vinylverbindungen wie Vinyläther, Styrol und alkylsubstituierte Stylrole zu verstehen, die allein oder in Mischung mit substi tuierten oder nichtsubstituierten Alkenen eingesetzt werden können.

Die Polymerisation des α-Olefins und Maleinsäureanhydrids kann nach üblichen Verfahren durchgeführt werden, z.B. in Masse oder als Lösungsmittelpolymerisation.

Bei einer Lösungsmittel polymerisation dienen insbesondere aromatische Kohlenwasserstoffe wie Toluol oder Xylol als Lösungsmittel.

Für die Polymerisation werden übliche Initiatoren verwendet, die die Bildung von Radikalen fördern, wie z.B. Di-t-butyl-peroxid, t-Butylperbenzoat usw. Das Molekulargewicht kann u.a. durch die Konzentration des Initiators gesteuert werden. So wird durch Erhöhung der Initiatorkonzentration das Molekulargewicht des erhaltenen Copolymers erniedrigt.

Um die bevorzugten Molekulargewichte von 5 000 bis 15 000 zu erhalten, ist es erforderlich, die Polymerisation gezielt durchzuführen. So wird durch Erhöhen der Temperatur während der Polymerisation das Molekulargewicht erniedrigt. Herabsetzen der Initiatorkonzentration bewirkt ein Ansteigen des Molekulargewichts. Bei der Lösungsmittelpolymerisation kann zusätzlich das Molekulargewicht noch durch die Konzentration der Monomeren gesteuert werden.

Wenn man auch mit Verfahren wie der Lösungsmittelpolymerisation, der Emulsionspolymerisation usw. gute brauchbare Copolymerisate erhält, ist doch das Verfahren Polymerisation in Masse bevorzugt, da hier ein Copolymerisat entsteht, das von Lösungsmitteln und Dispergiermitteln nicht befreit werden muß . Dieses Verfahren wird am besten bei Temperaturen von 140 bis 200°C durchgeführt.

Als Polyamine mit mindestens einer primären und einer tertiären Aminogruppe werden bevorzugt aliphatische Diamine der allgemeinen Formel verwendet:

$$\begin{array}{l} R \\ | \\ N - X - NH_2 \\ | \\ R' \end{array}$$

wobei X ein Alkylenrest mit 2 bis 10, vorzugsweise 2 bis 5 Kohlenstoffatomen ist, R ein Alkyrest mit 1 bis 4 Kohlenstoffatomen, vorzugsweise 1 bis 2 Kohlenstoffatomen R′ ein Alkyrest mit 1 bis 4, vorzugsweise 1 bis 2 Kohlenstoffatomen ist. Sowohl R, R′ als auch X können Substituenten tragen, die jedoch gegenüber der Anhydridfunktion des Copolymers reaktionsindifferent sein sollen, d.h. eine beachtlich geringere Reaktionsfähigkeit aufweisen müßten als die primäre Aminogruppe des Amins.

Anstelle der vorstehend erwähnten aliphatischen Diamine können auch andere Diamine oder Polyamine verwendet werden, die z.B. aliphatischer, cycloaliphatischer oder aromatischer Natur sind oder die über die als Mindestvoraussetzung geforderte eine tertiäre und eine primäre Aminogruppe noch weitere Aminogruppen aufweisen. Als Beispiel sei gennant N,N-Dimethyl-1,4-phenylendiamin.

Bevorzugte Diamine der erwähnten Art sind die N,N-Dialkyl-aminoalkylendiamine wie N,N-Dimethyl-1,3-propandiamin oder N,N-Dimethyläthylendiamin. Neben den speziellen und in allgemeiner Weise erwähnten Diaminen können auch primäre Monoamine wie z.B. Alkylamine, Alkylolamine, Arylamine mitverwendet werden. Auch ist es möglich, Diamine mitzuverwenden, die keine tertiäre Aminogruppe aufweisen, sondern z.B. eine primäre und eine sekundäre Aminogruppe besitzen, wie z.B. N-Methyläthylendiamin, N-Äthyläthylendiamin. Auch diprimäre Diamine wie Äthylendiamin, Propylendiamin, Hexamethylendiamin sowie Polyalkylenpolyamine, wie z.B. Diäthylentriamin, Triäthylentetramin können in Abmischung mit den vorgenannten primären, teriären Diaminen bis zu 50 % Mol-% eingesetzt werden. Vorzugsweise werden von den nicht-primären tertiären Diaminen jedoch nur 10 bis 30 % mitverwendet.

Bei der Imidierung werden vorzugsweise Lösungsmittel verwendet wie z.B. Toluol und Xylol. Diese Lösungsmittel sind besonders geeignet, um aus dem System nach der Umsetzung das Wasser zu entfernen.

Vorzugsweise wird das Copolymerisat mit äquimolaren Mengen an Diamin umgesetzt, d.h., daß pro Anhydridgruppe des Copolymerisats auch eine primäre Aminogruppe vorhanden ist. Abweichungen von diesem Verhältnis sind jedoch möglich.

Die Umsetzung des Diamins mit dem Anhydrid wird zweckmäßigerweise bei höherer Temperatur durchgeführt, wobei sich die Umsetzung unter Rückfluß empfiehlt. Nach Abschluß der Imidierung wird das Lösungsmittel abdestilliert.

Nach Abtrennung des Lösungsmittels und des Reaktionswassers wird das Imidamin teilweise mit Säure neutralisiert und zwar in einem Umfang, daß 1 bis 50 % der aminischen Stickstoffatome neutralisiert werden, vorzugswiese 1 bis 20 %.

Als Säuren zur Neutralisation werden Mineralsäuren wie Salzsäure, Schwefelsäure, Phosphorsäure oder organische Carbonsäuren wie Ameisensäure, Essigsäure u.dgl. eingesetzt, vorzugsweise jedoch Schwefelsäure, die vorteilhaft in verdünnter Form verwendet wird.

Nach der Teilneutralisierung wird Wasser zugegeben, um eine verdünnte Lösung bzw. Emulsion zu erhalten, und zwar in Mengen um eine 5 bis maximal 50 Gew.-%ige Lösung bzw. Emulsion des Imidiamins zu erhalten.

Die verdünnte Emulsion bzw. Lösung des Imidamins wird sodann mit Epichlorhydrin quaternisiert, wobei sich im allgemeinen Temperaturen von 0 bis 50°C als geeignet erwiesen haben. Vorzugsweise wird jedoch bei Temperaturen von 10 bis 30 °C, insbesondere bei Raumtemperatur, quaterniert.

Bei der Quaternierung kann das Epichlorhydrin in Mengen eingesetzt werden, so daß sämtliche tertiären Aminogruppen quaterniert werden. Vorzugsweise werden die tertiären Aminogruppen quantitativ quaterniert.

Es ist jedoch auch möglich, geringere Mengen an Epichlorhydrin zu verwenden, so daß noch Aminogruppen vorhanden sind, die teils als basische tertiäre Aminogruppe vorliegen, teils als durch die Verwendung von Säure neutralisierte Aminogruppe vorhanden sind.

Es war besonders überraschend, daß mittels des erfindungsgemäßen Verfahrens auf einfache Weise kationische Leimungsmittel zugänglich sind, ohne daß es zu der befürchteten Gelierung kommt, wie das bei Verfahren gemäß der DE-OS 1 570 914 der Fall ist. Die erhaltenen Leimungsmittel, die direkt als wäßrige Lösung bzw. Emulsion anfallen können unverzüglich gegebenenfalls nach noch weiterer Verdünnung als Leimungsmittel eingesetzt werden. Es ist nicht nötig, die Wirksamkeit des Leimungsmittels noch durch Veränderung des pH-Werts zu beeinflussen.

Die Lösungen bzw. Emulsionen sind lange Zeit lagerfähig, sind molekular-bzw. hochdispers und neigen weder zur Entmischung noch zur Gelbindung während der Lagerung.

Sie sind besonders als Oberflächenleimungsmittel geeignet.

Besonders überraschend war, daß sie auch eine hohe Leimungsaktivität beim Leimen von Papier aus sogenannten Sekundärfasern aufweisen. Unter Sekundärfasern versteht man fasrige Papierrohstoffe, die z.B. durch Aufarbeitung von Altpapier gewonnen wurden.

Besonders überraschend war es auch, daß sich die erfindungsgemäß hergestellten Leimungsmittel zum Leimen von Liner-Papierqualitäten eignen. Unter Liner versteht man ein Wellpappe-Rohpapier, welches in der Wellpappe die Deckenlage bildet. Wellpappe kann aus ungebleichtem Kraftzellstoff oder Altpapier hergestellt weden. Da die Zusammensetzung der Altpapierqualität starken Schwankungen ausgesetzt ist, benötigt man ein besonders effektives Leimungsmittel, das auch bei großen Unterschieden in der Rohstoffqualität zu einer zufriedenstellenden Leimung des Papiers führt.

Die Erfindung wird durch folgende Beispiele näher erläutert:

Beispiel 1

<u>Herstellung des α-Olefin-Maleinsäureanhydrid-Copolymer</u>

Einwaage: 2050 g (10 mol) C14/16-α-Olefin
1176 g (12 mol) Maleinsäureanhydrid
100 ml Trigonox B (Di-t-butylperoxid, ein Handelsprodukt der Akzo Chemie b.v.,Amersfoort, Niederlande)

Durchführung:

2050 g (10mol) C14/16-$\alpha$-Olefin werden vorgelegt, der Reaktionsraum 10 Min. mit Stickstoff gespült und auf 160°C aufgeheizt. Bei dieser Temperatur wird in Abständen von 30 Min. mit je 117,6 g (1,2 mol) Maleinsäureanhydrid und 10 ml Trigonox B versetzt. Die Reaktionswärme wird durch Kühlen abgeführt. Nach der 10. Zugabe wird noch 2h bei 160°C belassen. Nicht umgesetztes Olefin wird anschließend bei 200°C im Wasserstrahlvakuum abdestilliert. Das erhaltene Produkt besitzt ein Molekulargewicht von etwa 12 000.

Beispiel 2

Imidierung

Einwaage: 1075 g (4 mol) $\alpha$-Olefin-Maleinsäureanhydrid-Copolymer
1613 g Xylol
408 g (4 mol) Dimethylaminopropylamin
8 g p-Toluolsulfonsäure

Durchführung:

1075 g (4 mol) Copolymer (entsprechend Beispiel 1) und 8 g p-Toluolsulfonsäure in 1613 g Xylol werden bei 140°C vorgelegt. Im Verlauf von 1h werden 408 g (4 mol) Dimethylaminopropylamin zugegeben. Es wird hoch 1h unter Rückfluß gekocht und dann am Wasserabscheider erhitzt. Nach beendeter Wasserabscheidung wird das Xylol im Wasserstrahlvakuum abdestilliert. Die Amin-Bestimmung ergibt einen Aminwert von 2,64 meq/g, d.h. eine Imideinheit besitzt ein Molekulargewicht von 379.

Beispiel 3

Quaternierung

Zu 543 g Wasser von 80°C wird unter Rühren 100 g des in Beispiel 2 beschriebenen Imidamins hinzugegeben und zu 10 % mit $H_2SO_4$ neutralisiert ( = 26 ml 1 N $H_2SO_4$). Hierbei entsteht eine Emulsion mit sehr gleichmäßiger Teilchenverteilung. Danach wird diese Emulsion auf 20°C abgekühlt und unter Rühren mit 24,4 g Epichlorhydrin (= 100 % des vorhandenen aminischen Stickstoffs) versetzt.

Nach 24h Reaktionszeit bei 20°C ist aus der Emulsion eine klare Lösung entstanden, die einen Feststoffgehalt von 18 % aufweist. Die so entstandene Lösung zeigt einen pH-Wert von 8, 4 und ist direkt als Leimungsmittel einzusetzen.

Beispiel 4

Einsatz als Oberflächenleimungsmittel

Ein ungeleimtes Rohpapier (Liner-Qualität) mit einem Flächengewicht von 160 g/m$^2$ wird in der Leimpresse mit einer Leimflotte, bestehend aus 5 % oxidativ abgebauter Stärke und 0,4 % des Leimungsmittels, wie in Beispiel 3 beschrieben, geleimt. Die Aufnahme in der Leimpresse beträgt bei diesem Rohpapier 30 %.

Unter sonst gleichen Bedingungen wird die Oberflächenleimung mit einem handelsüblichen Leimungsmittel auf Basis Polyurethan durchgeführt.
Gemessen wird der Cobb-Wert nach DIN-Norm 53/22 - 1 Min.

| | Handelsprodukt | Leimungsmittel nach Beispiel 3 |
|---|---|---|
| Cobb-Wert 1 Minute | 42 | 26 |

Beispiel 5

Einsatz als Oberflächenleimungsmittel

Unter sonst gleichen Bedingungen wie im Beispiel 4 wird eine Oberflächenleimung durchgeführt, mit dem Unterschied, daß das Rohpapier aus 60 % Kiefernsulfat, 40 % Holzschliff und 20 % Kalziumkarbonat besteht.

Die Leimflottenaufnahme dieser Papierqualität in der Leimpresse beträgt 83 %.

| | Handelsprodukt | Leimungsmittel nach Beispiel 3 |
|---|---|---|
| Cobb-Wert 1 Minute | 48 | 24 |

**Ansprüche**

1. Verfahren zur Herstellung eines kationischen Leimungsmittels für Papier durch Umsetzen von α-Olefinen mit Maleinsäureanhydrid zu einem Copolymerisat, Imidierung des Copolymerisats mit einem Polyamin mit mindestens einer tertiären und einer primären Aminogruppe und Quaternierung des Imids mit Epichlorhydrin in Gegenwart von Wasser, dadurch gekennzeichnet, daß man α-Olefine mit Maleinsäureanhydrid in einem Molverhältnis α-Olefin zu Maleinsäureanhydrid von 1 : 0,8 bis 1 : 2 zu einem Copolymerisat mit einem durchschnittlichen Molekulargewicht von 3 000 bis 30 000 umsetzt, das Copolymerisat mit dem Polyamin in einem molaren Verhältnis Anhydridgruppe zu Polyamin von 2 : 1 bis 1 : 1 imidiert, die Aminogruppen des erhaltenen polymeren Imidamins zu 1 bis 50 % mit einer Säure neutralisiert, das teilneutralisierte Imidamin mit Wasser zu einer 5 bis 50 gew.-%igen Emulsion verdünnt und sodann mit Epichlorhydrin quarterniert.

2. Verfahren nach Anspruch 1, dadurch gekennzeichnet, daß das molare Verhältnis Anhydridgruppe zu Polyamin 1,4 : 1 bis 1 : 1 beträgt.

3. Verfahren nach Anspruch 1 oder 2, dadurch gekennzeichnet, daß man als Polyamin ein aliphatisches Diamin mit einer tertiären und einer primären Aminogruppe verwendet.

4. Verfahren nach einem der Ansprüche 1 bis 3, dadurch gekennzeichnet, daß man das α-Olefin mit Maleinsäureanhydrid zu einem Copolymerisat mit einem durchschnittlichen Molekulargewicht von 5000 bis 15 000 umsetzt.

5. Verfahren nach einem der Ansprüche 1 bis 4, dadurch gekennzeichnet, daß man das α-Olefin mit Maleinsäureanhydrid in Masse bei Temperaturen von 140 bis 200°C polymerisiert.

6. Verfahren nach einem der Ansprüche 1 bis 5, dadurch gekennzeichnet, daß man die Aminogruppen des erhaltenen polymeren Imidamins zu 1 bis 20% mit einer Säure, insbesondere mit Mineralsäure, wobei vorteilhafterweise Schwefelsäure eingesetzt wird, neutralisiert.

7. Verfahren nach einem der Ansprüche 1 bis 6, dadurch gekennzeichnet, daß man die Quaternierung mit Epichlorhydrin bei Temperaturen von 10 bis 30°C, insbesondere bei Raumtemperatur durchführt, wobei man vorteilhafterweise die tertiären Aminogruppen des polymeren Imidamins quantitativ quaterniert.

8. Leimungsmittel erhältlich nach einem Verfahren gemäß einem der Ansprüche 1 bis 7.

9. Verwendung des Leimungsmittels nach Anspruch 8 als Oberflächenleimungsmittel für Papier, insbesondere für Papier aus Sekundärfasern.

10. Verwendung des Leimungsmittels nach Anspruch 8 zum Leimen von Liner-Papierqualitäten.

Europäisches Patentamt

# EUROPÄISCHER RECHERCHENBERICHT

Nummer der Anmeldung
EP 87 10 5820

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | DE-A-1 570 914 (MONSANTO)<br>* Insgesamt *<br>--- | 1-3,7,8 | C 08 F 222/06<br>C 08 F 8/44<br>D 21 H 3/38 //<br>(C 08 F 222/06<br>C 08 F 210:00<br>C 08 F 212:00 ) |
| A | DE-A-2 544 948 (AKZO)<br>--- | | |
| A | EP-A-0 025 142 (BAYER)<br>----- | | |
| | | | RECHERCHIERTE SACHGEBIETE (Int. Cl.4) |
| | | | C 08 F<br>D 21 H |

Der vorliegende Recherchenbericht wurde für alle Patentansprüche erstellt.

| Recherchenort | Abschlußdatum der Recherche | Prüfer |
|---|---|---|
| DEN HAAG | 27-07-1987 | NESTBY K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument